(19) **Europäisches Patentamt / European Patent Office / Office européen des brevets**

(11) **EP 4 722 645 A1**

(12) **EUROPEAN PATENT APPLICATION**
published in accordance with Art. 153(4) EPC

(43) Date of publication:
08.04.2026 Bulletin 2026/15

(21) Application number: 24815447.8

(22) Date of filing: 27.05.2024

(51) International Patent Classification (IPC):
*G01B 15/02* (2006.01)  *G06T 7/00* (2017.01)
*G06T 7/60* (2017.01)

(52) Cooperative Patent Classification (CPC):
**G01B 15/02; G06T 7/00; G06T 7/60**

(86) International application number:
**PCT/JP2024/019399**

(87) International publication number:
**WO 2024/247964 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 30.05.2023 JP 2023089088

(71) Applicant: FUJIFILM Corporation
Tokyo 106-8620 (JP)

(72) Inventor: IWAMI, Kazuchika
Tokyo 106-8620 (JP)

(74) Representative: Meissner Bolte Partnerschaft mbB
Patentanwälte Rechtsanwälte
Postfach 86 06 24
81633 München (DE)

(54) **IMAGE PROCESSING DEVICE, IMAGE PROCESSING METHOD, AND PROGRAM**

(57) An image processing apparatus has at least one processor. The processor is configured to acquire a radiographic image of a pipe extending in a first direction, derive a power spectrum distribution of the radiographic image by performing Fourier transform on the radiographic image, and determine, based on the power spectrum distribution, a second direction orthogonal to the first direction.

FIG. 1

RADIOGRAPHIC IMAGE

EP 4 722 645 A1

**Description**

**BACKGROUND OF THE INVENTION**

1. Field of the Invention

The disclosed technology relates to an image processing apparatus, an image processing method, and a program.

2. Description of the Related Art

The following technologies are known as a technology related to a nondestructive inspection using a radiographic image of an object to be inspected. JP2012-2547A describes a method for analyzing an orientation state of a filler, including: a slice image acquisition step of acquiring one or more slice images at a predetermined interval in a predetermined direction with respect to at least a part of a resin molded product obtained by molding a resin composition containing a filler at a predetermined ratio; an image conversion step of converting the one or more slice images into one or more binarized images based on an image density of each of pixels; a power spectrum image acquisition step of acquiring one or more power spectrum images by performing Fourier transform on the one or more binarized images; and an orientation state analysis step of analyzing an orientation state of the filler in each power spectrum image based on the power spectrum image.

JP2012-47569A describes a pipe thickness measurement apparatus including: luminance profile acquisition means for acquiring a luminance profile of a radioscopic image of a pipe to be measured in a direction crossing the pipe; outer diameter point detection means for detecting an outer diameter point of the pipe based on the acquired luminance profile; region setting means for setting a predetermined region inside two outer diameter points of the pipe detected by the outer diameter point detection means; and inner diameter point detection means for detecting an inner diameter point of the pipe based on a luminance profile corresponding to the set predetermined region in the luminance profile acquired by the luminance profile acquisition means.

**SUMMARY OF THE INVENTION**

When the inner wall of a pipe is corroded or worn due to age deterioration or the like, the thickness (wall thickness) of the pipe is reduced, which may eventually lead to breakage. Thus, thickness measurement is periodically performed on the pipe. The thickness measurement of the pipe is performed using a radiographic image of the pipe to be inspected. To be specific, for the radiographic image of the pipe, a pixel value distribution (a profile of pixel values) along a direction perpendicular to a direction in which the pipe extends (hereinafter referred to as a pipe axis direction) is acquired, and the thickness of the pipe is measured based on the profile.

Under the existing circumstances, the direction perpendicular to the pipe axis direction is determined by manual work. However, in a typical radiographic image of a pipe, the direction of the pipe is random and is an oblique direction with respect to the coordinate axes of the radiographic image. In this case, it is difficult to determine the direction perpendicular to the pipe axis direction in the radiographic image. When a profile along a direction deviated from the direction perpendicular to the pipe axis direction is used in pipe thickness measurement, it is not possible to accurately measure the thickness.

The disclosed technology has been made in view of the above points, and an object thereof is to accurately determine a direction perpendicular to a pipe axis direction in a radiographic image of a pipe.

An image processing apparatus according to the disclosed technology is an image processing apparatus having at least one processor. The processor is configured to acquire a radiographic image of a pipe extending in a first direction; acquire a power spectrum distribution of the radiographic image by performing Fourier transform on the radiographic image; and determine, based on the power spectrum distribution, a second direction orthogonal to the first direction.

The processor may be configured to perform a process of causing a straight line to be displayed so as to be superimposed on the radiographic image, the straight line extending in the second direction. The processor may be configured to determine the second direction passing through a designated point in the radiographic image. The processor may be configured to perform a process of causing a straight line to be displayed so as to be superimposed on the radiographic image, the straight line passing through a designated point in the radiographic image and extending in the second direction. The processor may be configured to perform a process of causing a straight line to be displayed so as to be superimposed on the radiographic image, the straight line extending in a direction closest to an input direction among a plurality of directions determined as the second direction.

The processor may be configured to perform a process of generating, for the radiographic image, a profile of pixel values along the second direction. The processor may be configured to perform a process of measuring, based on the profile, a thickness of the pipe. The processor may be configured to generate, for each of a plurality of locations along the first direction of the radiographic image, a profile of pixel values along the second direction; and perform a process of measuring, based on a plurality of the profiles that have been generated, a thickness of the pipe at each of the plurality of locations.

An image processing method according to the disclosed technology is an image processing method in which at least one processor of an image processing apparatus executes a process including acquiring a radiographic image of a pipe extending in a first direction; acquiring a power spectrum distribution of the radiographic image by performing Fourier transform on the radiographic image; and determining, based on the power spectrum distribution, a second direction orthogonal to the first direction.

A program according to the disclosed technology is a program for causing at least one processor of an image processing apparatus to execute a process including acquiring a radiographic image of a pipe extending in a first direction; acquiring a power spectrum distribution of the radiographic image by performing Fourier transform on the radiographic image; and determining, based on the power spectrum distribution, a second direction orthogonal to the first direction.

According to the disclosed technology, it is possible to accurately determine a direction perpendicular to a pipe axis direction in a radiographic image of a pipe.

## BRIEF DESCRIPTION OF THE DRAWINGS

Fig. 1 is a diagram illustrating an example of the configuration of an inspection system according to an embodiment of the disclosed technology;
Fig. 2 is a diagram illustrating an example of the hardware configuration of an image processing apparatus according to the embodiment of the disclosed technology;
Fig. 3 is a functional block diagram illustrating an example of the functional configuration of the image processing apparatus according to the embodiment of the disclosed technology;
Fig. 4 is a diagram illustrating an example of a radiographic image of a pipe according to the embodiment of the disclosed technology;
Fig. 5 is a diagram illustrating an example of a power spectrum distribution according to the embodiment of the disclosed technology;
Fig. 6 is a diagram illustrating an example of a power spectrum distribution according to the embodiment of the disclosed technology;
Fig. 7A is a diagram illustrating an example of an image displayed on a display according to the embodiment of the disclosed technology;
Fig. 7B is a diagram illustrating an example of an image displayed on the display according to the embodiment of the disclosed technology;
Fig. 8 is a diagram illustrating an example of a profile according to the embodiment of the disclosed technology;
Fig. 9 is a flowchart illustrating an example of a flow of a process performed by executing an image processing program according to the embodiment of the disclosed technology;
Fig. 10 is a diagram illustrating an example of an image displayed on the display according to the embodiment of the disclosed technology;
Fig. 11 is a diagram illustrating an example of an image displayed on the display according to the embodiment of the disclosed technology; and
Fig. 12 is a diagram illustrating an example of a manner of measuring the thickness of a pipe according to the embodiment of the disclosed technology.

## DESCRIPTION OF THE PREFERRED EMBODIMENTS

Hereinafter, an example of an embodiment of the disclosed technology will be described with reference to the drawings. In the drawings, the same or equivalent components and portions are denoted by the same reference numerals, and a redundant description will be omitted.

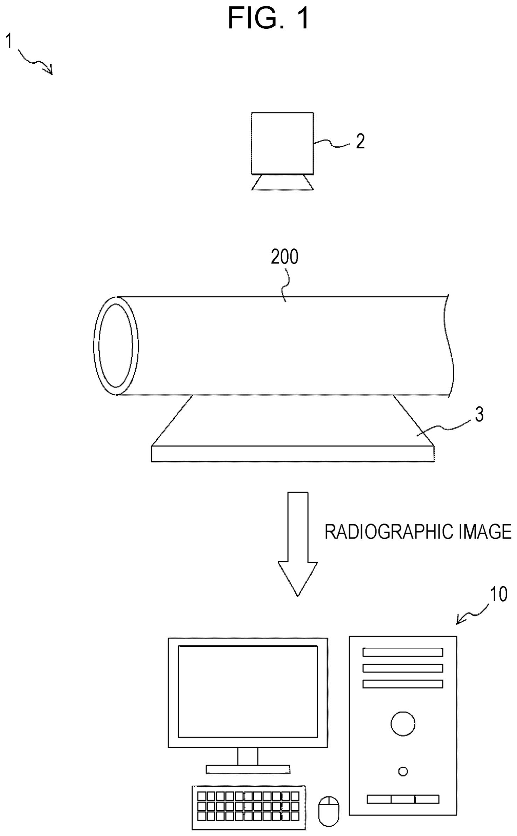

Fig. 1 is a diagram illustrating an example of the configuration of an inspection system 1 according to an embodiment of the disclosed technology. Fig. 1 illustrates a pipe 200, which is an object to be inspected. The pipe 200 is made of metal, has a cylindrical shape, and allows a gas or a liquid to flow therein, for example. The pipe 200 may include another member that has a cylindrical shape but does not allow a gas or a liquid to flow therein. When the inner wall of the pipe 200 is corroded or worn due to age deterioration or the like, the thickness (wall thickness) of the pipe is reduced, which may eventually lead to breakage. Thus, thickness measurement is periodically performed on the pipe 200. The inspection system 1 has a function of measuring the thickness of the pipe 200 by using a radiographic image of the pipe 200. The inspection system 1 has a radiation source 2, a radiation detector 3, and an image processing apparatus 10. The pipe 200 is disposed between the radiation source 2 and the radiation detector 3.

The radiation source 2 emits radiation such as X-rays toward the pipe 200. The radiation source 2 is, for example, of a portable type, can be easily installed at a site where the pipe 200 is installed, and enables flexible capturing of a radiographic image 210 of the pipe 200.

The radiation detector 3 is called a flat panel detector (FPD) and has a plurality of pixels that generate signal charges corresponding to radiation or visible light generated by converting radiation by a scintillator. The radiation detector 3 detects radiation emitted from the radiation source 2 and passed through the pipe 200, and outputs a radiographic image. The radiation detector 3 transmits the radiographic image of the pipe 200 to the image processing apparatus 10.

The image processing apparatus 10 is a computer connected to the radiation detector 3 so as to be capable of communicating therewith. The image processing apparatus 10 has a function of performing image processing on the radiographic image of the pipe 200 captured by the radiation detector 3. The image processing apparatus 10 also has a function of measuring and outputting the thickness of the pipe 200 by using a result of the image processing.

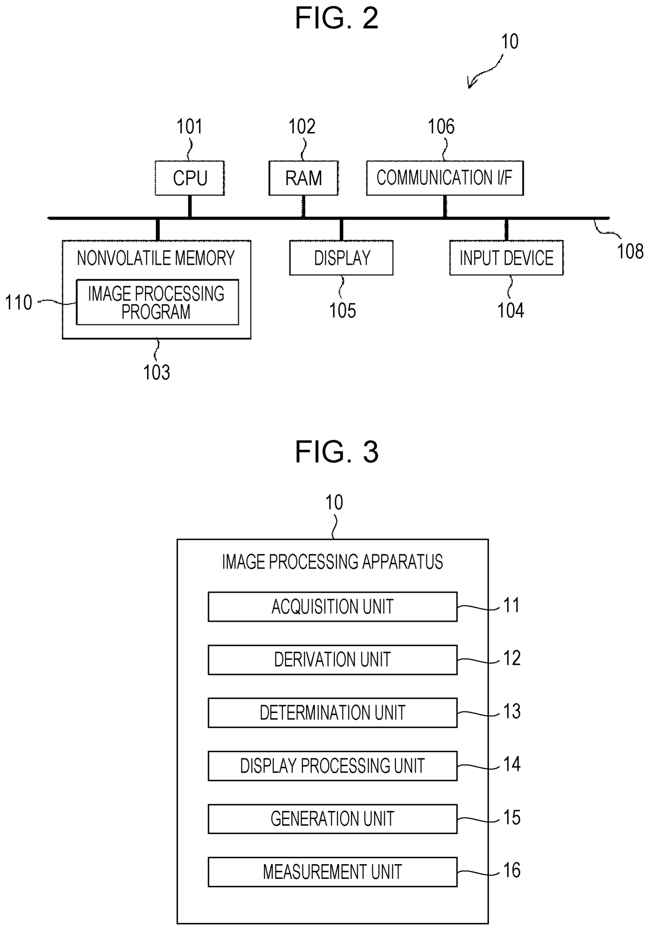

Fig. 2 is a diagram illustrating an example of the hardware configuration of the image processing apparatus 10. The image processing apparatus 10 includes a central processing unit (CPU) 101, a random access memory (RAM) 102, a nonvolatile memory 103, an input device 104 including a keyboard, a mouse, a microphone, and the like, a display 105, and a communication interface 106. These pieces of hardware are connected to a bus 108.

The display 105 may be a touch panel display. The communication interface 106 is an interface for the image processing apparatus 10 to communicate with the radiation detector 3. The communication may be performed in either a wired or wireless manner. For wireless communication, for example, a method conforming to an existing wireless communication standard such as Wi-Fi (registered trademark) or Bluetooth (registered trademark) can be applied.

The nonvolatile memory 103 is a nonvolatile storage medium such as a hard disk or a flash memory. The nonvolatile memory 103 stores an image processing program 110. The RAM 102 is a work memory for the CPU 101 to execute processing. The CPU 101 loads the image processing program 110 stored in the nonvolatile memory 103 into the RAM 102 and executes processing in accordance with the image processing program 110. The CPU 101 is an example of a "processor" in the disclosed technology.

Fig. 3 is a functional block diagram illustrating an example of the functional configuration of the image processing apparatus 10. The image processing apparatus 10 has an acquisition unit 11, a derivation unit 12, a determination unit 13, a display processing unit 14, a generation unit 15, and a measurement unit 16. The CPU 101 executing the image processing program 110 functions as the acquisition unit 11, the derivation unit 12, the determination unit 13, the display processing unit 14, the generation unit 15, and the measurement unit 16.

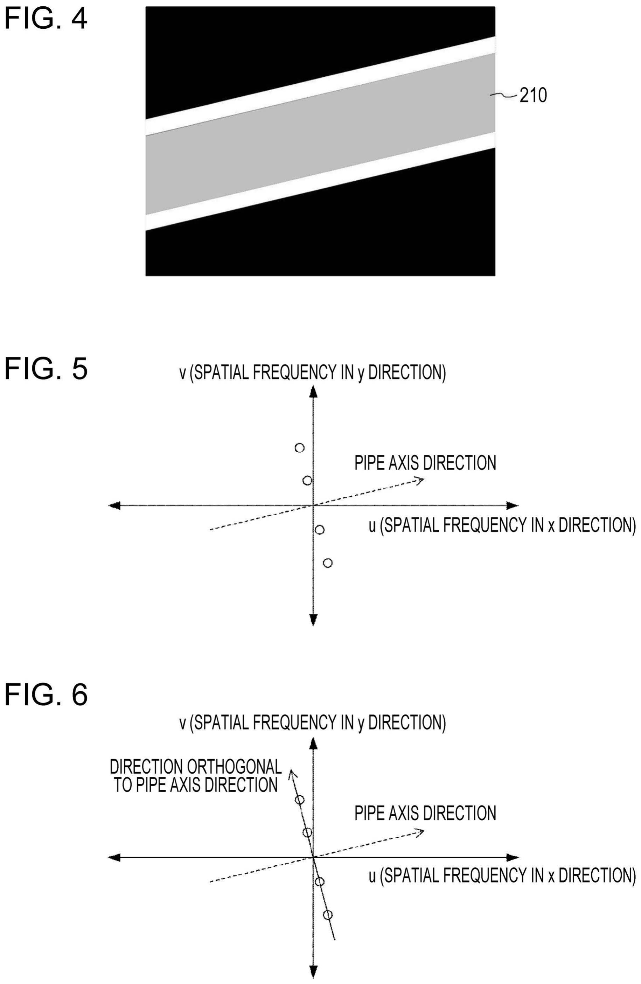

The acquisition unit 11 acquires a radiographic image of the pipe 200 captured by the radiation detector 3. Fig. 4 is a diagram illustrating an example of the radiographic image 210 of the pipe 200. In the radiographic image 210 illustrated in Fig. 4, the pipe 200 extends in an oblique direction with respect to the coordinate axes of the radiographic image. Hereinafter, a direction in which the pipe 200 extends will be referred to as a "pipe axis direction". The "pipe axis direction" is an example of a "first direction" in the disclosed technology.

The derivation unit 12 performs Fourier transform on the radiographic image acquired by the acquisition unit 11, and thereby derives a power spectrum distribution of the radiographic image. The Fourier transform herein is to express the radiographic image by superposition of sine waves. The radiographic image is regarded as a superposition of two-dimensional waves each having a color shade (pixel value) as an amplitude. The reciprocal of the period of shade is referred to as a spatial frequency. The Fourier transform performed on a radiographic image f(x, y), which is a two-dimensional image having an image size of M×N, is expressed by the following equation (1).

$$F(u,v) = \frac{1}{MN}\sum_{x=0}^{M-1}\sum_{y=0}^{N-1} f(x,y)e^{-2\pi i(\frac{ux}{M}+\frac{vy}{N})} \quad \cdots \quad (1)$$

The power spectrum distribution is obtained by plotting spectral intensities defined by $|F(u, v)|^2$ on a uv coordinate plane. The power spectrum distribution is synonymous with a so-called power spectrum image. The power spectrum image is an image that represents the frequency characteristics of the original image and is displayed by replacing spectral intensities with luminances in a coordinate system having a center as the origin. In the power spectrum image, a low-frequency component is arranged in a center portion, high-frequency components in individual directions are arranged in a peripheral portion, and the luminance increases as the component increases.

Fig. 5 is a diagram illustrating an example of the power spectrum distribution derived by the derivation unit 12 for the radiographic image 210 of the pipe 200 illustrated in Fig. 4. For example, the derivation unit 12 may derive the power spectrum distribution by plotting only points having a spectral intensity higher than a threshold value on the uv coordinate plane. Alternatively, the derivation unit 12 may derive the power spectrum distribution by plotting points having a relatively high spectral intensity on the uv coordinate plane.

The determination unit 13 determines, based on the power spectrum distribution derived by the derivation unit 12, a direction orthogonal to the pipe axis direction in the radiographic image of the pipe 200. As illustrated in Fig. 4, in the radiographic image 210 of the pipe 200, shading is seen along the radial direction of the pipe 200. Thus, in the power spectrum distribution, points having a high spectral intensity are arranged along the radial direction of the pipe 200. The radial direction of the pipe 200 is a direction orthogonal to the pipe axis direction. That is, the direction in which the points having a high spectral intensity are arranged in the power spectrum distribution is a direction orthogonal to the pipe axis direction. As illustrated in Fig. 6, the determination unit 13 determines, as a direction orthogonal to the pipe axis direction, the direction in which the points having a high spectral intensity are arranged in the power spectrum distribution. For example, the determination unit 13 may determine, as a direction orthogonal to the pipe axis direction, the direction of a straight line derived for a plurality of points having a high spectral intensity by using a least squares method. When only one point is extracted as a point having a high spectral intensity, the direction of a straight line connecting the origin of the uv coordinates and the one point may be determined as a direction orthogonal to the pipe axis direction.

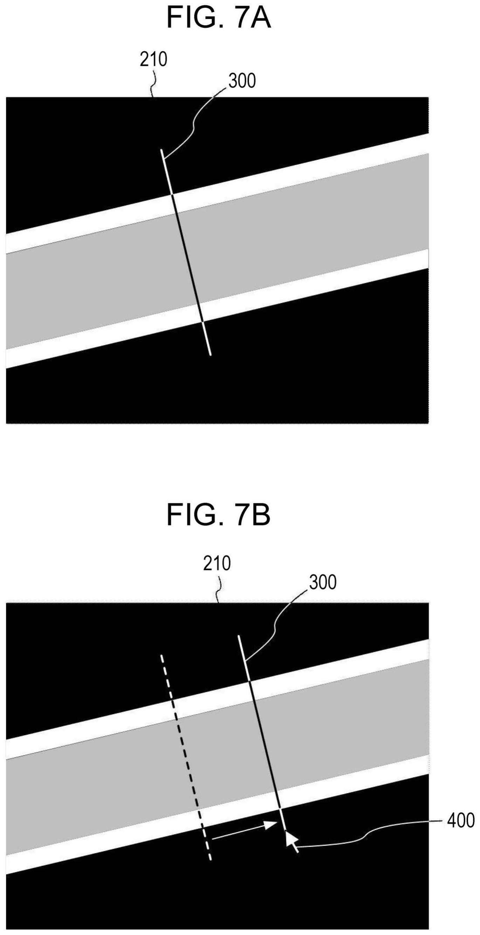

The display processing unit 14 causes the radiographic image of the pipe 200 acquired by the acquisition unit 11 to be displayed on the display 105. The display processing unit 14 causes a straight line extending in the direction orthogonal to the pipe axis direction determined by the determination unit 13 to be displayed so as to be superimposed on the radiographic image of the pipe 200. Fig. 7A is a diagram illustrating an example of an image displayed on the display 105. The display processing unit 14 causes a straight line 300 extending in the direction orthogonal to the pipe axis direction to be displayed at a position intersecting a pipe depiction portion of the radiographic image 210.

The generation unit 15 generates, for the radiographic image of the pipe 200 acquired by the acquisition unit 11, a profile of pixel values along the direction orthogonal to the pipe axis direction determined by the determination unit 13 (that is, the radial direction of the pipe 200). To be more specific, the generation unit 15 generates a profile of pixel values along the straight line 300 (see Fig. 7A) displayed on the display 105. As illustrated in Fig. 7B, a user is able to slide the straight line 300 along the pipe axis direction by using a pointer 400 that can be operated by the input device 104. Thus, it is possible to generate a profile at any position along the pipe axis direction.

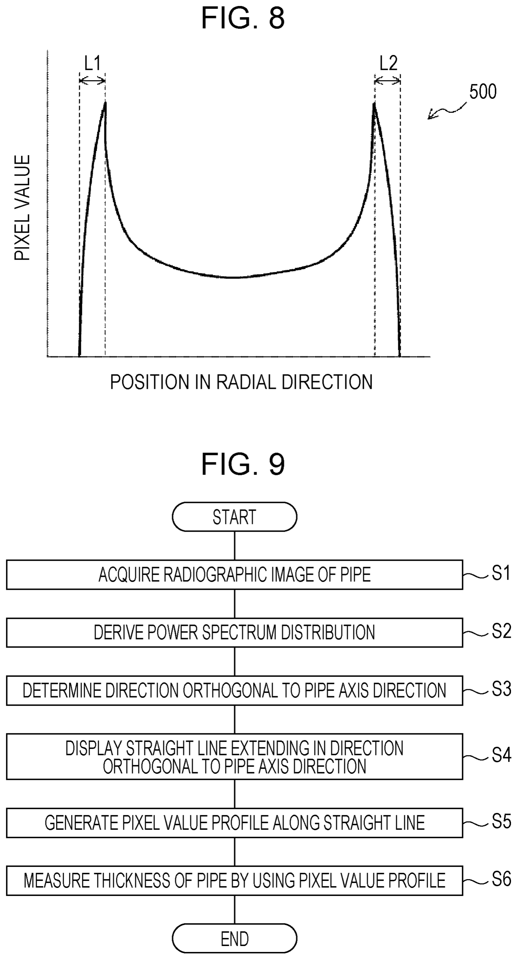

Fig. 8 is a diagram illustrating an example of a profile 500 generated for the radiographic image 210 of the pipe 200. The profile 500 is obtained by plotting positions in the direction determined as a direction orthogonal to the pipe axis direction (that is, positions in the radial direction), with the pixel values indicated in the vertical axis, for the radiographic image of the pipe 200. At both end portions in the radial direction of the pipe 200, the distance over which radiation passes through the metal portion is relatively long, and thus the pixel value is relatively large. On the other hand, at a center portion in the radial direction of the pipe 200, the distance over which radiation passes through the metal portion is relatively short, and thus the pixel value is relatively small. Thus, the profile 500 having peaks at both end portions in the radial direction of the pipe 200 is generated.

The measurement unit 16 measures the thickness of the pipe 200, based on the profile generated by the generation unit 15. The measurement unit 16 outputs a distance L1 from the rising edge of the profile 500 illustrated in Fig. 8 to the left-side peak and a distance L2 from the right-side peak to the falling edge of the profile 500, or a value calculated from these distances, as measurement values of the thickness of the pipe 200. The thickness at any position along the pipe axis direction can be measured by sliding the straight line 300 along the pipe axis direction, as illustrated in Fig. 7B.

Fig. 9 is a flowchart illustrating an example of a flow of a process performed by the CPU 101 executing the image processing program 110. The image processing program 110 is executed, for example, in response to a user providing an instruction to start the process by operating the input device 104.

In step S1, the CPU 101 functions as the acquisition unit 11 and acquires a radiographic image of the pipe 200 captured by the radiation detector 3.

In step S2, the CPU 101 functions as the derivation unit 12 and performs Fourier transform on the radiographic image acquired in step S1 to derive a power spectrum distribution of the radiographic image. The CPU 101 derives the power spectrum distribution by, for example, plotting only points having a spectral intensity higher than a threshold value on the uv coordinate plane.

In step S3, the CPU 101 functions as the determination unit 13 and determines, based on the power spectrum distribution derived in step S2, a direction orthogonal to the pipe axis direction in the radiographic image of the pipe 200. The determination unit 13 determines, as the direction orthogonal to the pipe axis direction, a direction in which points having a high spectral intensity are arranged in the power spectrum distribution.

In step S4, the CPU 101 functions as the display processing unit 14 and causes the radiographic image of the pipe 200 acquired in step S1 to be displayed on the display 105. The CPU 101 further causes a straight line extending in the direction orthogonal to the pipe axis direction determined in step S3 to be displayed so as to be superimposed on the radiographic image of the pipe 200.

In step S5, the CPU 101 functions as the generation unit 15 and generates, for the radiographic image of the pipe 200 acquired in step S1, a profile of pixel values along the direction orthogonal to the pipe axis direction determined in step S3. To be more specific, the generation unit 15 generates a profile of pixel values along the straight line 300 (see Fig. 7A) displayed on the display 105.

In step S6, the CPU 101 functions as the measurement unit 16 and measures, based on the profile generated by the generation unit 15 in step S5, the thickness of the pipe 200. The measurement unit 16 outputs the distance L1 from the rising edge of the profile 500 illustrated in Fig. 8 to the left-side peak and the distance L2 from the right-side peak to the falling edge of the profile 500, or a value calculated from these distances, as measurement values of the thickness of the pipe 200.

As described above, the image processing apparatus 10 according to the embodiment of the disclosed technology acquires a radiographic image of the pipe 200 extending in the pipe axis direction, performs Fourier transform on the radiographic image to derive a power spectrum distribution of the radiographic image, and determines, based on the power spectrum distribution, a direction orthogonal to the pipe axis direction.

In thickness measurement of a pipe, a profile of pixel values along a direction perpendicular to a pipe axis direction is acquired for a radiographic image of the pipe. Under the existing circumstances, the direction perpendicular to the pipe axis direction is determined by manual work. However, in a typical radiographic image of a pipe, the direction of the pipe is random and is an oblique direction with respect to the coordinate axes of the radiographic image. In this case, it is difficult to determine the direction perpendicular to the pipe axis direction in the radiographic image. When a profile along a direction deviated from the direction perpendicular to the pipe axis direction is used in pipe thickness measurement, it is not possible to accurately measure the thickness.

In the radiographic image of the pipe 200, shading is seen along the radial direction of the pipe 200. Thus, in the power spectrum distribution, points having a high spectral intensity are arranged along the radial direction of the pipe 200. The radial direction of the pipe 200 is a direction orthogonal to the pipe axis direction. That is, the direction in which the points having a high spectral intensity are arranged in the power spectrum distribution is a direction orthogonal to the pipe axis direction. The image processing apparatus 10 according to the embodiment of the disclosed technology performs Fourier transform on a radiographic image of the pipe 200 to derive a power spectrum distribution of the radiographic image, determines, based on the power spectrum distribution, a direction orthogonal to the pipe axis direction, and is thus capable of accurately determining a direction perpendicular to the pipe axis direction in the radiographic image of the pipe 200. The direction perpendicular to the pipe axis direction can be determined without manual work, and thus thickness measurement of the pipe 200 can be automated.

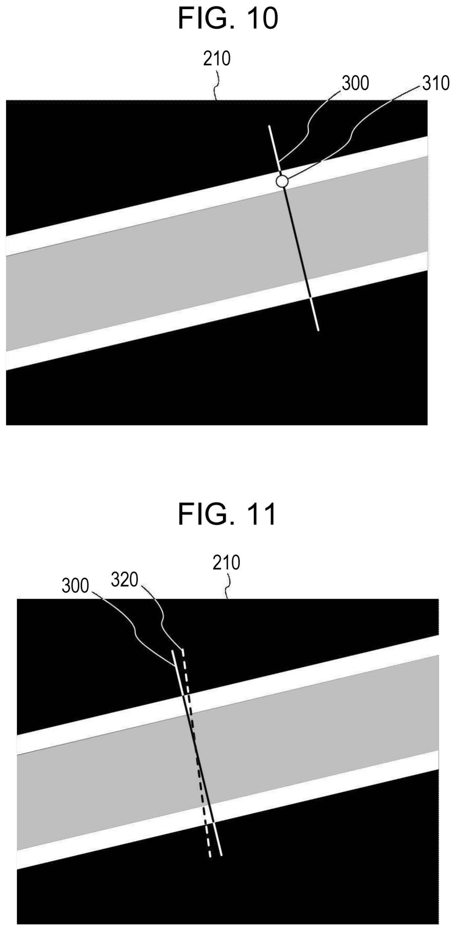

Alternatively, the display processing unit 14 may cause a straight line extending in the direction orthogonal to the pipe axis direction determined by the determination unit 13 to be displayed so as to be superimposed on the radiographic image 210 of the pipe 200 in the following manner. For example, as illustrated in Fig. 10, the display processing unit 14 may cause the straight line 300 passing through a designated point 310 in the radiographic image and extending in the direction orthogonal to the pipe axis direction to be displayed so as to be superimposed on the radiographic image 210 of the pipe 200. In this case, the determination unit 13 determines a direction passing through the point 310 and orthogonal to the pipe axis direction. A user is able to arrange the point 310 at any position in the radiographic image 210 by operating the input device 104. A straight line extending in the direction orthogonal to the pipe axis direction may be displayed in a range in the radiographic image 210 designated by the user.

Alternatively, as illustrated in Fig. 11, the display processing unit 14 may cause the straight line 300 extending in a direction closest to an input direction among a plurality of directions determined as a direction orthogonal to the pipe axis direction to be displayed so as to be superimposed on the radiographic image 210 of the pipe 200. In Fig. 11, a dotted line 320 is input by a user as a direction orthogonal to the pipe axis direction. However, it is assumed that the dotted line 320 deviates from a direction orthogonal to the pipe axis direction. On the other hand, according to the image processing apparatus 10, it is also assumed that two or more directions are derived as a direction orthogonal to the pipe axis direction. When two or more directions are derived as a direction orthogonal to the pipe axis direction, the display processing unit 14 causes the straight line 300 extending in a direction closest to the dotted line 320 input by the user to be displayed as a straight line along the direction orthogonal to the pipe axis direction so as to be superimposed on the radiographic image 210 of the pipe 200.

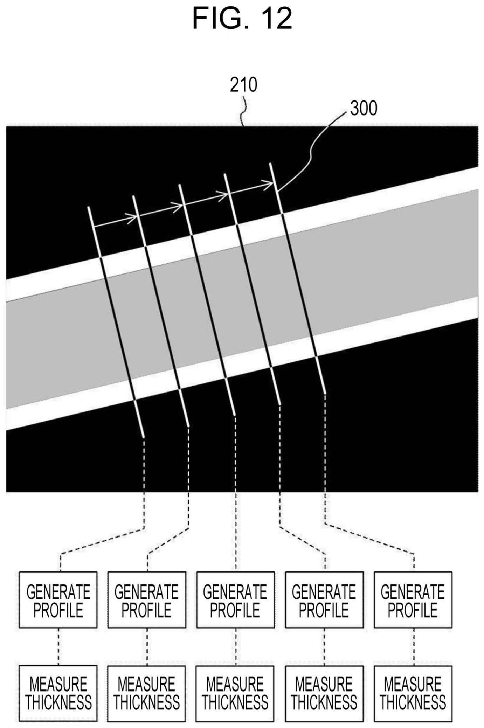

Alternatively, as illustrated in Fig. 12, the generation unit 15 may generate, for each of a plurality of locations along the pipe axis direction of the radiographic image 210, a profile of pixel values along a direction orthogonal to the pipe axis direction. The measurement unit 16 may perform a process of measuring, based on the plurality of generated profiles, the thickness of the pipe 200 at each of the plurality of locations.

A case in which the pipe 200 is linear has been described above as an example, but the pipe 200 may be curved and have a curved portion. When a thickness measurement point is at the curved portion, a tangential direction at the measurement point may be regarded as the pipe axis direction. The image processing apparatus 10 determines, based on a power spectrum distribution, a direction orthogonal to the tangential direction at the measurement point.

Regarding the above embodiment, the following appendices are further disclosed.

Appendix 1

An image processing apparatus having at least one processor,
the processor being configured to:

acquire a radiographic image of a pipe extending in a first direction;
acquire a power spectrum distribution of the radiographic image by performing Fourier transform on the radiographic image; and
determine, based on the power spectrum distribution, a second direction orthogonal to the first direction.

Appendix 2

The image processing apparatus according to appendix 1, in which the processor is configured to perform a process of causing a straight line to be displayed so as to be superimposed on the radiographic image, the straight line extending in the second direction.

Appendix 3

The image processing apparatus according to appendix 1 or appendix 2, in which the processor is configured to determine the second direction passing through a designated point in the radiographic image.

Appendix 4

The image processing apparatus according to any one of appendix 1 to appendix 3, in which the processor is configured to perform a process of causing a straight line to be displayed so as to be superimposed on the radiographic image, the straight line passing through a designated point in the radiographic image and extending in the second direction.

Appendix 5

The image processing apparatus according to claim 1 or appendix 2, in which the processor is configured to perform a process of causing a straight line to be displayed so as to be superimposed on the radiographic image, the straight line extending in a direction closest to an input direction among a plurality of directions determined as the second direction.

Appendix 6

The image processing apparatus according to any one of appendix 1 to appendix 5, in which the processor is configured to perform a process of generating, for the radiographic image, a profile of pixel values along the second direction.

Appendix 7

The image processing apparatus according to appendix 6, in which the processor is configured to perform a process of measuring, based on the profile, a thickness of the pipe.

Appendix 8

The image processing apparatus according to any one of appendix 1 to appendix 7, in which the processor is configured to:

generate, for each of a plurality of locations along the first direction of the radiographic image, a profile of pixel values along the second direction; and
perform a process of measuring, based on a plurality of the profiles that have been generated, a thickness of the pipe at each of the plurality of locations.

# EP 4 722 645 A1

Appendix 9

An image processing method in which at least one processor of an image processing apparatus executes a process including:

acquiring a radiographic image of a pipe extending in a first direction;
acquiring a power spectrum distribution of the radiographic image by performing Fourier transform on the radiographic image; and
determining, based on the power spectrum distribution, a second direction orthogonal to the first direction.

Appendix 10

A program for causing at least one processor of an image processing apparatus to execute a process including:

acquiring a radiographic image of a pipe extending in a first direction;
acquiring a power spectrum distribution of the radiographic image by performing Fourier transform on the radiographic image; and
determining, based on the power spectrum distribution, a second direction orthogonal to the first direction.

The disclosure of JP2023-089088 filed on May 30, 2023 is incorporated in this specification by reference in its entirety. All documents, patent applications, and technical standards described in this specification are incorporated in this specification by reference to such a degree that each document, patent application, and technical standard are specifically and individually described as being incorporated by reference.

## Claims

1. An image processing apparatus comprising at least one processor,
   the processor being configured to:

   acquire a radiographic image of a pipe extending in a first direction;
   acquire a power spectrum distribution of the radiographic image by performing Fourier transform on the radiographic image; and
   determine, based on the power spectrum distribution, a second direction orthogonal to the first direction.

2. The image processing apparatus according to claim 1, wherein the processor is configured to perform a process of causing a straight line to be displayed so as to be superimposed on the radiographic image, the straight line extending in the second direction.

3. The image processing apparatus according to claim 1, wherein the processor is configured to determine the second direction passing through a designated point in the radiographic image.

4. The image processing apparatus according to claim 1, wherein the processor is configured to perform a process of causing a straight line to be displayed so as to be superimposed on the radiographic image, the straight line passing through a designated point in the radiographic image and extending in the second direction.

5. The image processing apparatus according to claim 1, wherein the processor is configured to perform a process of causing a straight line to be displayed so as to be superimposed on the radiographic image, the straight line extending in a direction closest to an input direction among a plurality of directions determined as the second direction.

6. The image processing apparatus according to claim 1, wherein the processor is configured to perform a process of generating, for the radiographic image, a profile of pixel values along the second direction.

7. The image processing apparatus according to claim 6, wherein the processor is configured to perform a process of measuring, based on the profile, a thickness of the pipe.

8. The image processing apparatus according to claim 1, wherein the processor is configured to:

generate, for each of a plurality of locations along the first direction of the radiographic image, a profile of pixel values along the second direction; and

perform a process of measuring, based on a plurality of the profiles that have been generated, a thickness of the pipe at each of the plurality of locations.

9. An image processing method in which at least one processor of an image processing apparatus executes a process comprising:

acquiring a radiographic image of a pipe extending in a first direction;

acquiring a power spectrum distribution of the radiographic image by performing Fourier transform on the radiographic image; and

determining, based on the power spectrum distribution, a second direction orthogonal to the first direction.

10. A program for causing at least one processor of an image processing apparatus to execute a process comprising:

acquiring a radiographic image of a pipe extending in a first direction;

acquiring a power spectrum distribution of the radiographic image by performing Fourier transform on the radiographic image; and

determining, based on the power spectrum distribution, a second direction orthogonal to the first direction.

# FIG. 1

1

2

200

3

RADIOGRAPHIC IMAGE

10

# FIG. 2

10

101          102          106

| CPU |    | RAM |    | COMMUNICATION I/F |

108

| NONVOLATILE MEMORY | | DISPLAY | | INPUT DEVICE |

110 — IMAGE PROCESSING PROGRAM

105          104

103

# FIG. 3

10

IMAGE PROCESSING APPARATUS

| ACQUISITION UNIT | — 11

| DERIVATION UNIT | — 12

| DETERMINATION UNIT | — 13

| DISPLAY PROCESSING UNIT | — 14

| GENERATION UNIT | — 15

| MEASUREMENT UNIT | — 16

FIG. 4

FIG. 5

FIG. 6

# FIG. 7A

# FIG. 7B

# FIG. 8

POSITION IN RADIAL DIRECTION

# FIG. 9

```
                    ┌─────────────┐
                    │    START    │
                    └─────────────┘
                          │
    ┌─────────────────────────────────────────────────┐
    │      ACQUIRE RADIOGRAPHIC IMAGE OF PIPE          │──── S1
    └─────────────────────────────────────────────────┘
                          │
    ┌─────────────────────────────────────────────────┐
    │        DERIVE POWER SPECTRUM DISTRIBUTION        │──── S2
    └─────────────────────────────────────────────────┘
                          │
    ┌─────────────────────────────────────────────────┐
    │ DETERMINE DIRECTION ORTHOGONAL TO PIPE AXIS DIRECTION │──── S3
    └─────────────────────────────────────────────────┘
                          │
    ┌─────────────────────────────────────────────────┐
    │     DISPLAY STRAIGHT LINE EXTENDING IN DIRECTION │──── S4
    │       ORTHOGONAL TO PIPE AXIS DIRECTION          │
    └─────────────────────────────────────────────────┘
                          │
    ┌─────────────────────────────────────────────────┐
    │  GENERATE PIXEL VALUE PROFILE ALONG STRAIGHT LINE │──── S5
    └─────────────────────────────────────────────────┘
                          │
    ┌─────────────────────────────────────────────────┐
    │ MEASURE THICKNESS OF PIPE BY USING PIXEL VALUE PROFILE │──── S6
    └─────────────────────────────────────────────────┘
                          │
                    ┌─────────────┐
                    │     END     │
                    └─────────────┘
```

## FIG. 10

## FIG. 11

# FIG. 12

## INTERNATIONAL SEARCH REPORT

| International application No. |
|---|
| **PCT/JP2024/019399** |

**A.    CLASSIFICATION OF SUBJECT MATTER**

*G01B 15/02*(2006.01)i; *G06T 7/00*(2017.01)i; *G06T 7/60*(2017.01)i
FI:    G01B15/02 H; G06T7/00 610Z; G06T7/60 150Z

According to International Patent Classification (IPC) or to both national classification and IPC

**B.    FIELDS SEARCHED**

Minimum documentation searched (classification system followed by classification symbols)

G01B15/02; G06T7/00; G06T7/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-192006 A (FUJI ELECTRIC CO., LTD.) 16 December 2021 (2021-12-16) entire text, all drawings | 1-10 |
| A | JP 2017-122694 A (FUJI ELECTRIC CO., LTD.) 13 July 2017 (2017-07-13) entire text, all drawings | 1-10 |
| A | JP 11-118735 A (HITACHI ENG. & SERVICE CO., LTD.) 30 April 1999 (1999-04-30) entire text, all drawings | 1-10 |
| A | WO 2012/026321 A1 (FUJIFILM CORPORATION) 01 March 2012 (2012-03-01) entire text, all drawings | 1-10 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 July 2024** | **16 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/019399**

| Patent document cited in search report | | | Publication date (day/month/year) | Patent family member(s) | | | Publication date (day/month/year) |
|---|---|---|---|---|---|---|---|
| JP | 2021-192006 | A | 16 December 2021 | JP | 6858289 | B1 | |
| JP | 2017-122694 | A | 13 July 2017 | (Family: none) | | | |
| JP | 11-118735 | A | 30 April 1999 | (Family: none) | | | |
| WO | 2012/026321 | A1 | 01 March 2012 | US | 2013/0163809 | A1 | |
| | | | | entire text, all drawings | | | |
| | | | | JP | 2012-47569 | A | |
| | | | | EP | 2600102 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012002547 A
- JP 2012047569 A
- JP 2023089088 A